# EUROPEAN PATENT APPLICATION

(11) **EP 4 738 322 A1**
(43) Date of publication of application: **06.05.2026**
(21) Application number: 25211617.3
(22) Date of filing: 28.10.2025
(51) Int. Cl.: G09G 3/00

(54) **CIRCUIT DEVICE AND HEAD-UP DISPLAY**

(30) Priority: 30.10.2024 JP 2024190598
(71) Applicant: Seiko Epson Corporation, Tokyo 160-8801 (JP)
(72) Inventor: AKIBA, Yasutoshi, Suwa-shi, Nagano, 392-8502 (JP)
(74) Representative: MERH-IP Matias Erny Reichl Hoffmann Patentanwälte PartG mbB

(57) **Abstract**

A circuit device includes an image selection circuit that selects selected image data that is image data of a selected area smaller than an input image from input image data that is image data of the input image, a buffer memory that stores the selected image data, and a distortion correction circuit that performs distortion correction on the input image and outputs output image data that is image data of an output image. The selected area includes a plurality of areas or a polygonal area. When input-side coordinates of the input image corresponding to output-side coordinates of the output image belong to the selected area, the distortion correction circuit generates pixel data of the output image data at the output-side coordinates from the selected image data stored in the buffer memory.

## Description

The present application is based on, and claims priority from JP Application Serial Number 2024-190598, filed October 30, 2024, the disclosure of which is hereby incorporated by reference herein in its entirety.

### BACKGROUND

### 1. Technical Field

The present disclosure relates to a circuit device, a head-up display, and the like.

### 2. Related Art

JP-A-2011-097474 discloses an image processing apparatus including an image dividing unit, an image editing buffer, and an image editing unit. When sequentially cutting out a plurality of divided images from an input image, the image dividing unit provides an overlap area for the divided images adjacent to each other, the image editing buffer sequentially stores the plurality of divided images, and the image editing unit sequentially performs image editing processing on the plurality of divided images. This reduces the capacity of the image editing buffer.

JP-A-2011-097474 is an example of the related art.

When there is an area where a display object is not displayed in the image, the area is also stored in the buffer, and there is a problem that the memory capacity of the buffer increases. For example, in a head-up display, a display object is displayed only in a part of a display area, and most of the display area is a transparent area (a black area as an image). By buffering such a transparent area, the memory capacity increases. In JP-A-2011-097474, a line buffer of a plurality of lines is used. An input image is divided as it is and stored in the line buffer, and thus an area not required to be stored is also buffered.

### SUMMARY

An aspect of the present disclosure relates to a circuit device including an image selection circuit that selects selected image data that is image data of a selected area smaller than an input image from input image data that is image data of the input image, a buffer memory that stores the selected image data, and a distortion correction circuit that performs distortion correction on the input image and outputs output image data that is image data of an output image, wherein the selected area includes a plurality of areas or a polygonal area, and when input-side coordinates of the input image corresponding to output-side coordinates of the output image belong to the selected area, the distortion correction circuit generates pixel data of the output image data at the output-side coordinates from the selected image data stored in the buffer memory.

Another aspect of the present disclosure relates to a head-up display including the circuit device described above and a display device that projects the output image using a projection optical system.

### BRIEF DESCRIPTION OF THE DRAWINGS

FIG. 1 shows an example of an input image before distortion correction and an output image after distortion correction.
FIG. 2 shows an example of a method of surrounding a display object by one rectangle and storing only image data in the rectangle in a buffer memory.
FIG. 3 shows a configuration example of a head-up display including a circuit device of an embodiment.
FIG. 4 shows an example of a plurality of selected areas.
FIG. 5 shows an example of a plurality of selected areas.
FIG. 6 shows an example of a polygonal selected area.
FIG. 7 shows a first detailed configuration example of a distortion correction circuit.
FIG. 8 shows an example of selected areas and an example of selected images stored in the buffer memory.
FIG. 9 shows an example of a processing flow of the distortion correction circuit.
FIG. 10 shows pixel interpolation at a boundary of the selected area.
FIG. 11 shows a second detailed configuration example of the distortion correction circuit.

### DESCRIPTION OF EMBODIMENTS

Hereinafter, preferred embodiments of the present disclosure will be described in detail. The following embodiments do not unduly limit the description in "What is Claimed is", and not all of the configurations described in the embodiments are necessarily essential component elements. For example, an example in which a memory saving method of the present disclosure is applied to a head-up display will be described below. However, the memory saving method of the present disclosure can be applied to any image processing involving distortion correction, and can be applied to, for example, a head-mounted display, a projector, or a curved display. Hereinafter, the head-up display may be abbreviated as HUD.

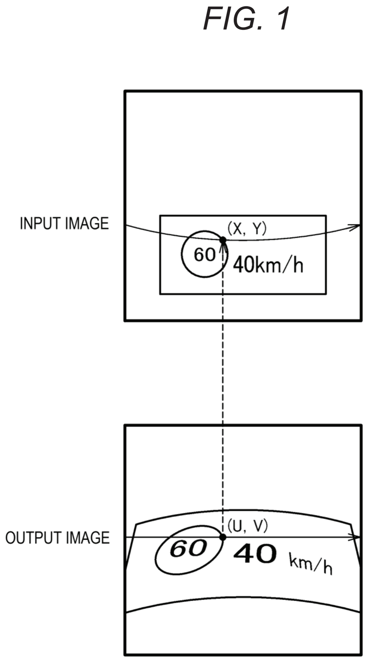

FIG. 1 shows an example of an input image before distortion correction and an output image after distortion correction. The distortion correction is to apply inverse image distortion to image distortion when an image is projected on a screen of the HUD to the image. As a result, the distortion due to the distortion correction and the distortion due to the projection cancel each other, so that image display with no or reduced distortion is obtained. The image distortion due to projection is image distortion due to a curved surface of a projection surface such as a screen, image distortion due to a projection optical system, or image distortion including both.

As shown in FIG. 1, in the distortion correction, the pixel coordinates of the output image are counted as in a raster scan, for example. An arrow shown in the output image in FIG. 1 indicates counting of the pixel coordinates of one horizontal line. When the pixel coordinates of the output image are (U, V), (U, V) are converted into coordinates (X, Y) of the input image based on a distortion correction table. The pixel data of the coordinates (U, V) of the output image is configured based on the pixel data of the coordinates (X, Y) of the input image. When (U, V) are scanned along one line of the output image, (X, Y) move in a curved manner as indicated by an arrow in the input image. By repeating this processing up to the last horizontal line of one frame of the output image, an output image after distortion correction is obtained.

As described above, in the distortion correction, since the pixel data of the output image is configured while referring to the input image, it is necessary to temporarily store the input image in a buffer memory. However, in the HUD, most of the screen is in transparent display in which the background can be seen through the screen, and a display object is present only in a part of the screen. Therefore, when a frame memory that stores the same number of pixels as that of the input image, a line buffer that stores the same number of horizontal pixels as the number of horizontal pixels of the input image, or the like is used, there is a problem that black data is stored in most of the frame memory or the line buffer and the memory capacity is wasted. The transparent display shows black data as image data, but the display object is shown in black in FIG. 1. The same applies hereinafter.

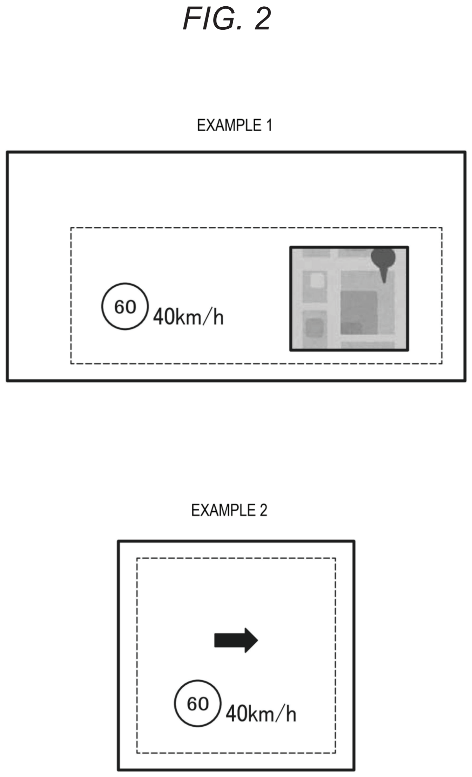

As indicated by a dotted rectangle in FIG. 2, a method of surrounding a display object with one rectangle and storing only image data in the rectangle in the buffer memory is conceivable. However, it may be difficult to efficiently surround a display object with a rectangle, and the rectangle may include many black data areas. As shown in Example 1, display objects are separated from each other, or as shown in Example 2, widths of display objects are not the same.

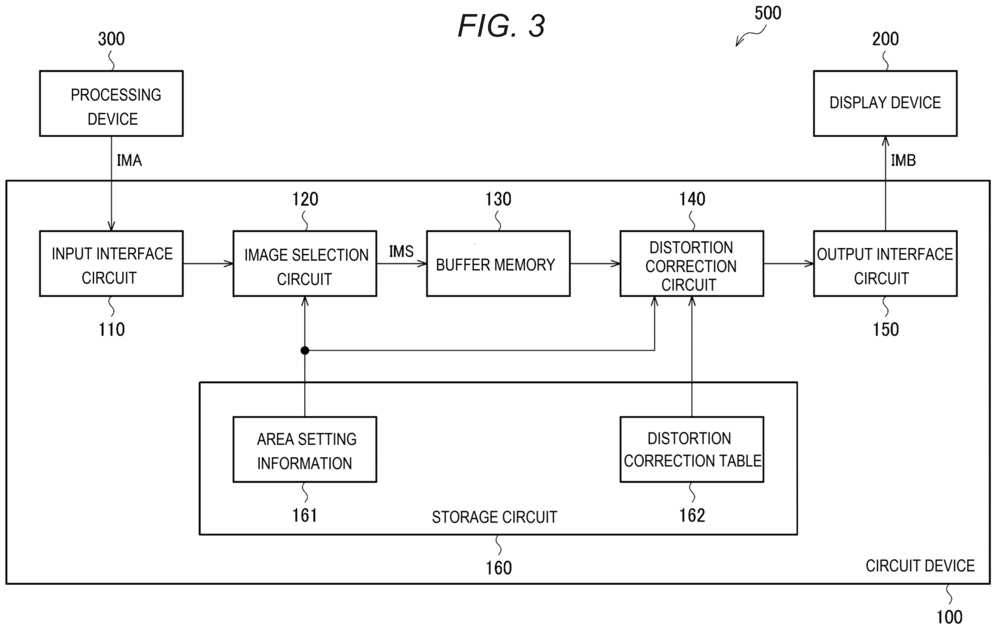

FIG. 3 shows a configuration example of a head-up display 500 including a circuit device 100 of the present embodiment. The head-up display 500 includes the circuit device 100, a display device 200, and a processing device 300.

The processing device 300 transmits input image data IMA, which is image data of an input image, to the circuit device 100. The processing device 300 is a so-called SoC, and is a processor such as a CPU or a microcomputer. SoC is an abbreviation for System on Chip. CPU is an abbreviation for Central Processing Unit.

The circuit device 100 includes an input interface circuit 110, an image selection circuit 120, a buffer memory 130, a distortion correction circuit 140, an output interface circuit 150, and a storage circuit 160. The circuit device 100 is, for example, an integrated circuit device in which a plurality of circuit elements are integrated on a semiconductor substrate.

The input interface circuit 110 receives the input image data IMA from the processing device 300. The input interface circuit 110 may be any one of interface circuits of various image communication standards, and is, for example, a reception circuit such as an LVDS, a DVI, a display port, a GMSL, a GVIF, or the like. LVDS is an abbreviation for low voltage differential signaling, DVI is an abbreviation for digital visual interface, GMSL is an abbreviation for gigabit multimedia serial link, and GVIF is an abbreviation for gigabit video interface.

The storage circuit 160 stores area setting information 161 and a distortion correction table 162. The storage circuit 160 may include a nonvolatile memory such as an EEPROM or an OTP memory, a volatile memory such as an SRAM or a DRAM, or a register such as a flip-flop circuit. The area setting information 161 and the distortion correction table 162 may be stored in different types of storage circuits. For example, the area setting information 161 may be stored in a register, and the distortion correction table 162 may be stored in a volatile memory or a nonvolatile memory. The area setting information 161 may be written in the storage circuit 160 from the processing device 300 via an interface (not illustrated). Alternatively, when the storage circuit 160 is a nonvolatile memory, the area setting information 161 may be written in the storage circuit 160 in advance. The same applies to the distortion correction table 162.

The image selection circuit 120 selects selected image data IMS, which is the image data of a selected area, from the input image data IMA based on the area setting information 161. The selected area is an area smaller than the entire input image. Specifically, it is necessary that at least one of a condition that the number of horizontal pixels of the selected area is smaller than the number of horizontal pixels of the input image and a condition that the number of vertical pixels of the selected area is smaller than the number of vertical pixels of the input image is satisfied. The image selection circuit 120 writes the selected image data IMS in the buffer memory 130. The selected area includes a plurality of areas or a polygonal area surrounding display objects of the input image. The display object is, for example, a character, a symbol, a figure, an icon, a picture, or a photograph. Taking an in-vehicle HUD as an example, the display object is, for example, a vehicle speed display, a display indicating a state of a vehicle, a direction indicator display, a warning light, an AR display, a traffic sign, or a navigation display. AR is an abbreviation of augmented reality. The display indicating the state of the vehicle is, for example, a display indicating the position of the shift lever, the fuel amount, the cooling water temperature, the inside air temperature, the outside air temperature, the setting of the air conditioner, or the audio setting. Specifically, the polygon is a polygon having three or more vertices except a rectangle in which all four vertices are right angles. All vertices of the polygon may have convex angles, or part of the vertices may have concave angles. The convex angle has an interior angle smaller than 180 degrees, and the concave angle has an interior angle larger than 180 degrees.

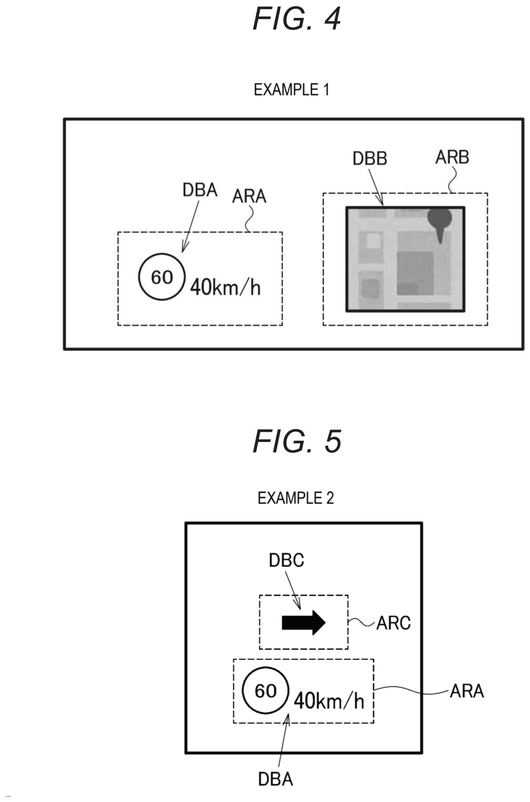

FIGS. 4 and 5 illustrate examples in which the selected area includes a plurality of areas. In Example 1 of FIG. 4, the input image includes a display object DBA and a display object DBB arranged in the horizontal direction. A rectangular area ARA surrounding the display object DBA and a rectangular area ARB surrounding the display object DBB are the selected areas. The rectangular areas ARA and ARB do not overlap each other. In Example 2 of FIG. 5, the input image includes the display object DBC and the display object DBA arranged in the vertical direction. A rectangular area ARC surrounding the display object DBC and the rectangular area ARA surrounding the display object DBA are selected areas. The rectangular areas ARC and ARA do not overlap each other. The selected area may include three or more areas. The shape of each area is not limited to a rectangle.

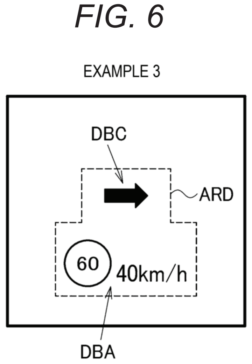

FIG. 6 illustrates an example in which the selected area is a polygonal area. In Example 3 of FIG. 6, the input image includes the display object DBC and the display object DBA arranged in the vertical direction. A polygonal area ARD surrounding the display object DBC and the display object DBA is the selected area. In this example, the polygonal area ARD has an octagonal shape having six convex angles and two concave angles. The interior angle of the convex angle of the polygon is not limited to 90 degrees, and the interior angle of the concave angle is not limited to 270 degrees.

The area setting information 161 is information for setting the position and shape of the selected area in the input image. The area setting information 161 may be coordinates of all vertices of the area. Alternatively, in the case of a rectangular area, the area setting information 161 may be the coordinates of a reference position, the width in the horizontal direction, and the width in the vertical direction. The reference position may be any vertex of the rectangle or may be the center point.

The buffer memory 130 temporarily stores the selected image data IMS. The buffer memory 130 may be a line buffer that stores image data of a plurality of scanning lines, or may be a frame memory that stores image data of one frame. The buffer memory 130 is, for example, a volatile memory such as an SRAM or a DRAM.

The distortion correction circuit 140 performs distortion correction on the input image based on the distortion correction table 162, and outputs output image data IMB which is image data of an output image. Here, the distortion correction circuit 140 generates the output image data IMB of the area corresponding to the selected image in the output image from the selected image data IMS based on the area setting information 161, and sets the output image data IMB of the other areas to predetermined color data. The predetermined color data is color data to be transparent in HUD display, and is, for example, black data. The distortion correction table 162 is a table that associates input-side coordinates (X, Y) of the input image with output-side coordinates (U, V) of the output image. The distortion correction table 162 is also referred to as a warp parameter.

The output interface circuit 150 transmits the output image data IMB to the display device 200. The output interface circuit 150 may be any one of interface circuits of various image communication standards, and is, for example, a transmission circuit such as an LVDS, a DVI, a display port, a GMSL, or a GVIF.

The image selection circuit 120 and the distortion correction circuit 140 are logic circuits. Each of the image selection circuit 120 and the distortion correction circuit 140 may be configured as an individual circuit, or the image selection circuit 120 and the distortion correction circuit 140 may be configured as a circuit integrated by automatic placement and routing or the like. Part or all of these logic circuits may be implemented by a processor such as a DSP. DSP is an abbreviation for digital signal processor. In this case, a program and a command set in which the function of each circuit is described are stored in the memory, and the function of each circuit is implemented by the processor executing the program and the command set.

The display device 200 displays a virtual image in the field of view of the user based on the output image data IMB received from the circuit device 100. The display device 200 includes a display controller, a display driver, an image display device, and an optical system. However, the configuration of the display device 200 is not limited thereto, and for example, the circuit device 100 may incorporate the function of the display controller.

The display controller performs image data transmission to the display driver and display timing control based on the received output image data IMB. The display driver drives the image display device based on the image data from the display controller and the display timing control, and the image display device displays an image corresponding to the output image data IMB. The optical system includes a reflector and the like, and projects an image displayed by the image display device onto a screen. The screen may be a transparent projection target having a projection surface that reflects projection light. For example, the screen is a windscreen of a vehicle on which the HUD is mounted. The image display device includes, for example, a liquid crystal display panel and a backlight device. Or, the image display device may include a laser source, a mirror that reflects a laser, and an actuator that drives the mirror for scanning with the laser. Or, the image display device may include a digital mirror device including a laser source, an array of micromirrors, and an actuator that drives each of the micromirrors.

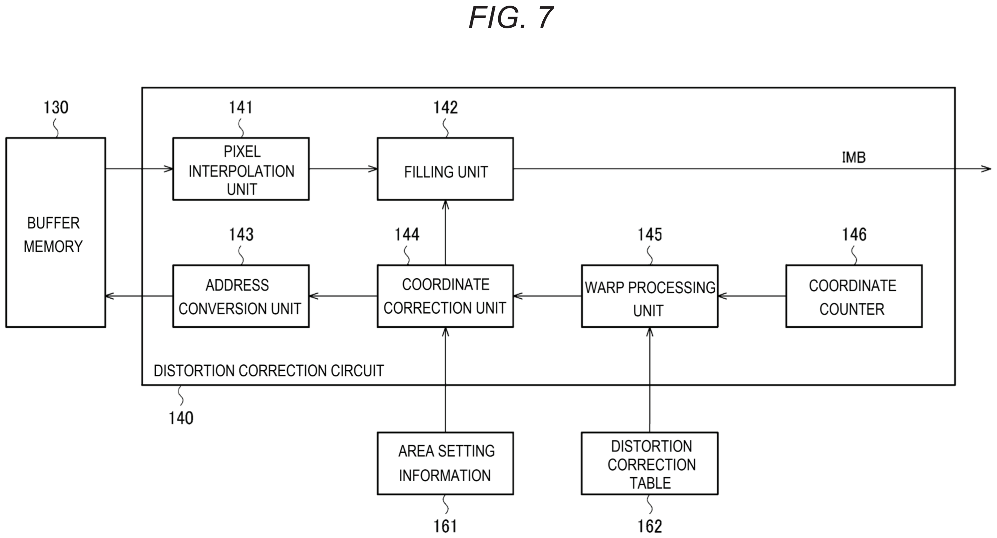

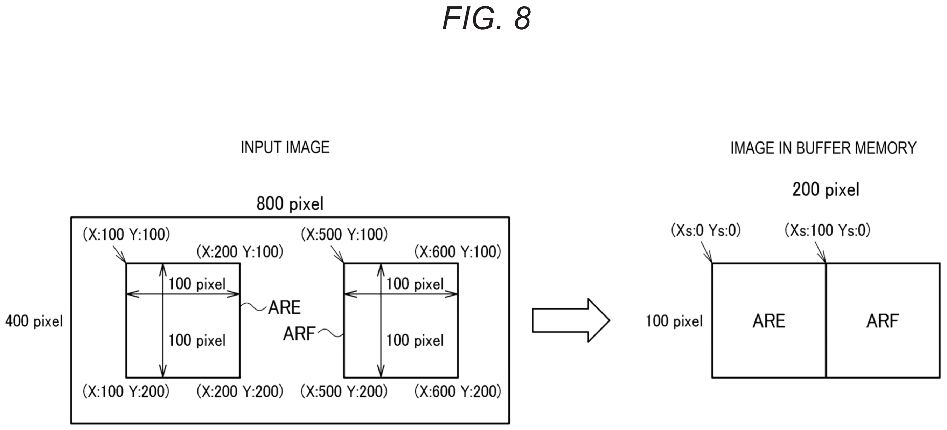

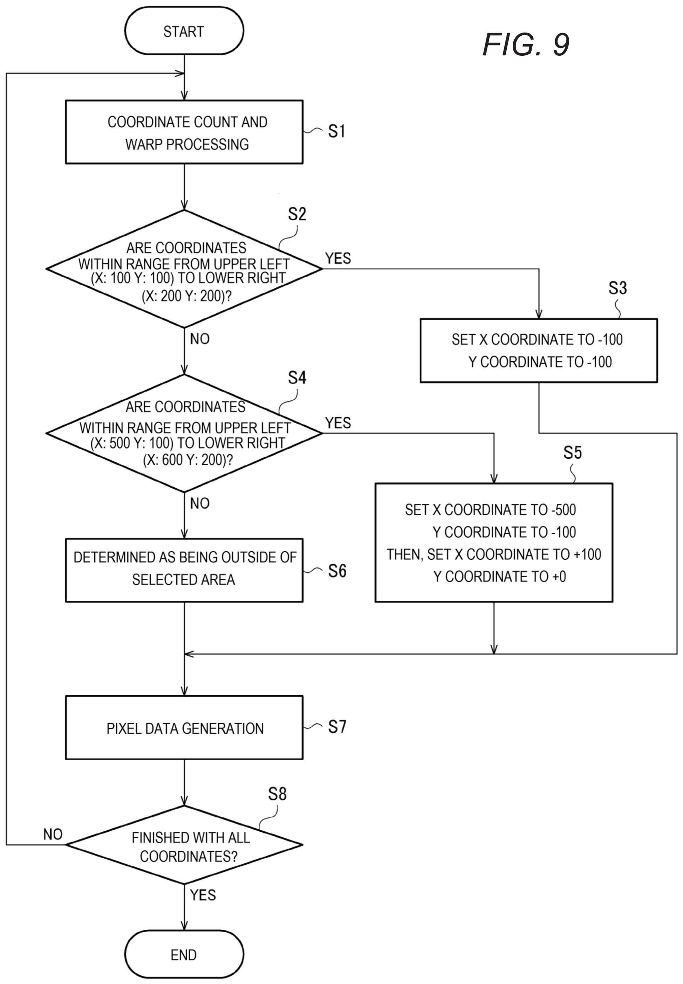

FIG. 7 shows a first detailed configuration example of the distortion correction circuit 140. The distortion correction circuit 140 includes a pixel interpolation unit 141, a filling unit 142, an address conversion unit 143, a coordinate correction unit 144, a warp processing unit 145, and a coordinate counter 146. Hereinafter, the operation of each unit will be described with reference to FIGS. 8 and 9. In FIGS. 8 and 9, coordinates (X, Y) = (100, 100) are described as (X: 100 Y: 100).

FIG. 8 shows an example of selected areas and an example of selected images stored in the buffer memory. It is assumed that the number of horizontal pixels of the input image is 800, the number of vertical pixels is 400, and two areas ARE and ARF are set as selected areas in the input image. The reference point of each area is an upper left vertex. The reference point of the area ARE in the input image is at coordinates (X: 100 Y: 100), the number of horizontal pixels is 100, and the number of vertical pixels is 100. The reference point of the area ARF in the input image is at coordinates (X: 500 Y: 100), the number of horizontal pixels is 100, and the number of vertical pixels is 100. The number of horizontal pixels of the selected image stored in the buffer memory 130 is 100 + 100 = 200, and the number of vertical pixels is 100. The coordinates in the selected image in the buffer memory 130 are expressed by (Xs, Ys). In the buffer memory 130, the reference point of the area ARE is at coordinates (Xs: 0 Ys: 0), and the reference point of the area ARF is at coordinates (Xs: 100 Ys: 0).

FIG. 9 illustrates a processing flow example of the distortion correction circuit 140. In step S1, the distortion correction circuit 140 performs coordinate count and warp processing. The coordinate counter 146 outputs output-side coordinates (U, V) by count. Specifically, the coordinate counter 146 outputs (U, V) = (0, 0) at the first pixel of the frame, increments the coordinates every loop from S8, and resets the horizontal coordinate U and the vertical coordinate V when (U, V) reaches the last pixel of the frame. In the increment for each loop, the coordinate counter 146 first increments the horizontal coordinate U, resets U when U reaches the number of horizontal pixels, increments the vertical coordinate V, and repeats this until the last pixel of the frame. The warp processing unit 145 converts the output-side coordinates (U, V) into input-side coordinates (X, Y) with reference to the distortion correction table 162.

In step S2 to S6, the coordinate correction unit 144 performs correction from the input-side coordinates (X, Y) to the coordinates on the selected image in the buffer memory 130. The coordinates in the selected image in the buffer memory 130 are referred to as selected coordinates (Xs, Ys). The flow will be described below with reference to the example in FIG. 8.

In step S2, the coordinate correction unit 144 determines whether (X, Y) are within a range from (X: 100 Y: 100) to (X: 200 Y: 200), that is, whether (X, Y) belong to the area ARE. When determining that (X, Y) belong to the area ARE, the coordinate correction unit 144 sets the selected coordinates to (Xs, Ys) = (X-100, Y-100) in step S3, and proceeds to step S7. That is, the coordinate correction unit 144 shifts the reference point (X: 100 Y: 100) of the area ARE to (Xs: 0 Ys: 0). When determining that (X, Y) do not belong to the area ARE in step S2, the coordinate correction unit 144 proceeds to step S4.

In step S4, the coordinate correction unit 144 determines whether (X, Y) are within a range from (X: 500 Y: 100) to (X: 600 Y: 200), that is, whether (X, Y) belong to the area ARF. When determining that (X, Y) belong to the area ARF, the coordinate correction unit 144 obtains coordinates (Xs', Ys') = (X-500, Y-100) in step S5. Thereafter, the coordinate correction unit 144 sets the selected coordinates to (Xs, Ys) = (Xs'+100, Ys'+0), and proceeds to step S7. That is, the coordinate correction unit 144 temporarily shifts the reference point of the area ARF from (X: 500 Y: 100) to (Xs': 0 Ys': 0), and further shifts the reference point to (Xs: 100 Ys: 0). When determining that (X, Y) do not belong to the area ARF in step S4, the coordinate correction unit 144 determines that (X, Y) are outside the selected area in step S6, and proceeds to step S7.

In step S7, the distortion correction circuit 140 generates pixel data of the output-side coordinates (U, V). From step S3 or S5 to step S7, the address conversion unit 143 converts (Xs, Ys) into the address of the buffer memory 130. Specifically, the address conversion unit 143 outputs an address that designates a plurality of pixels around (Xs, Ys) in the input image. The pixel interpolation unit 141 reads pixel data of the plurality of pixels from the address of the buffer memory 130 and performs pixel interpolation using the pixel data to generate pixel data of (U, V) of the output image. From step S6 to step S7, the filling unit 142 sets the pixel data of (U, V) of the output image to predetermined color data. The predetermined color data is, for example, black data. The output image data IMB includes pixel data output from the pixel interpolation unit 141 and the filling unit 142. In step S8, the distortion correction circuit 140 determines whether all the output-side coordinates (U, V) are counted. The distortion correction circuit 140 ends the processing when all the coordinates are counted, and returns to step S1 when not all the coordinates are counted.

Note that how to combine and store the selected areas in the buffer memory 130 is not limited to the example of FIG. 8, and various combinations are assumed. For example, in FIG. 8, the vertical coordinates of the reference points of the two areas are the same as Y = 100 and Y = 100 in the input image, but the vertical coordinates of the reference points may be different as Y = 100 and Y = 200. In this case, for example, the selected areas may be stored in the buffer memory 130 with the vertical coordinates of the reference points of the two areas shifted to Ys = 0 and Ys = 100 for keeping the difference. Alternatively, when two areas are arranged in the vertical direction in the input image, the two areas may be arranged and combined in the vertical direction and stored in the buffer memory 130. Concurrently, the selected areas may be stored in the buffer memory 130 with the horizontal coordinates of the reference points of the two areas set to Xs = 0. When the selected area is polygonal, the polygonal area may be divided into a plurality of areas, which may be recombined and stored in the buffer memory 130. For example, the area ARD in FIG. 6 may be divided into two upper and lower rectangular areas. Assuming that the number of pixels in the upper rectangular area is 100 × 100 and the number of pixels in the lower rectangular area is 200 × 100, for example, the reference point of the upper rectangular area may be (Xs: 0 Ys: 0) and the reference point of the lower rectangular area may be (Xs: 0 Ys: 100) in the buffer memory 130.

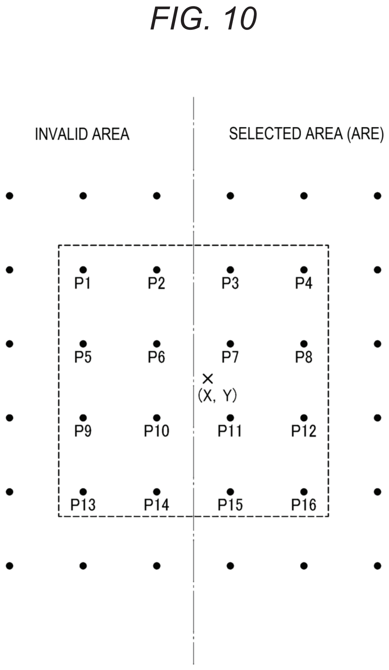

FIG. 10 shows pixel interpolation at a boundary of the selected area. An area outside the selected area in the input image is referred to as an invalid area. Here, the area ARE in the input image of FIG. 8 is taken as an example, but the same applies to the area ARF.

When determining that the input-side coordinates (X, Y) belong to the area ARE, the coordinate correction unit 144 selects a plurality of pixels around (X, Y). Although FIG. 10 illustrates an example in which the surrounding 4 × 4 pixels P1 to P16 are selected, the surrounding n × m pixels may be selected. Each of n and m is an integer of 2 or more. The coordinate correction unit 144 excludes the pixels P1, P2, P5, P6, P9, P10, P13, and P14 belonging to the invalid area among the pixels P1 to P16, and leaves the pixels P3, P4, P7, P8, P11, P12, P15, and P16 belonging to the area ARE based on the area setting information 161. The coordinate correction unit 144 converts the input-side coordinates (X, Y) of the remaining pixels into selected coordinates (Xs, Ys). The address conversion unit 143 converts the selected coordinates (Xs, Ys) into an address. The pixel interpolation unit 141 reads the pixel data of the pixels P3, P4, P7, P8, P11, P12, P15, and P16 belonging to the area ARE based on the address, and performs pixel interpolation to generate pixel data of the output-side coordinates (U, V).

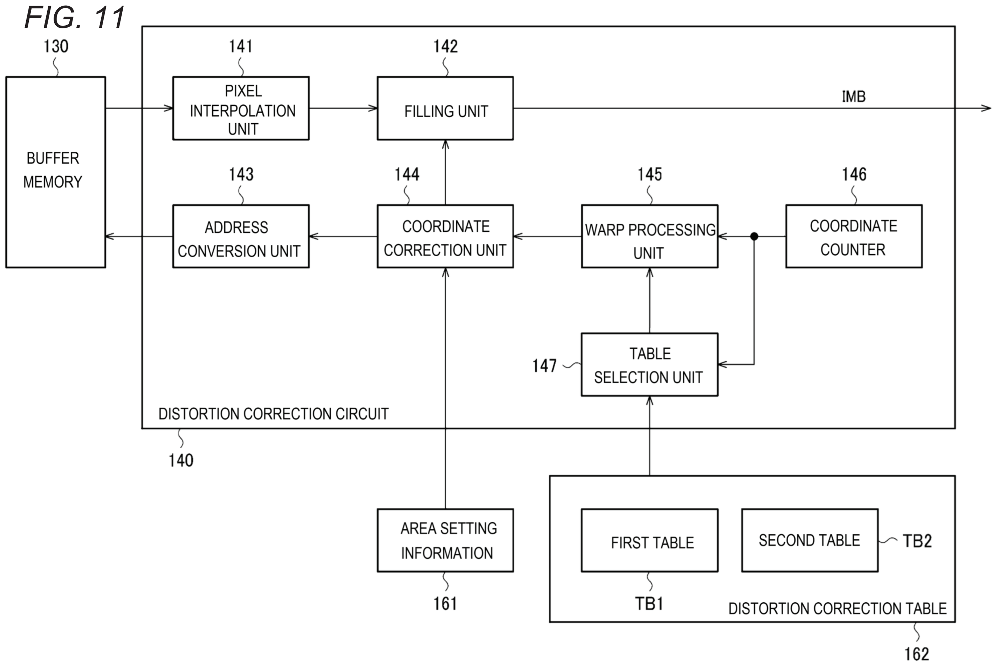

FIG. 11 shows a second detailed configuration example of the distortion correction circuit 140. Hereinafter, differences from the first detailed configuration example of FIG. 7 will be mainly described. The distortion correction circuit 140 further includes a table selection unit 147.

The distortion correction table 162 includes a plurality of tables corresponding to a plurality of correction areas. Here, an example in which the distortion correction table 162 includes a first table TB1 corresponding to a first correction area and a second table TB2 corresponding to a second correction area is shown. The first correction area and the second correction area are areas set on the output image. These correction areas may be defined as areas different from the selected area, or the correction area may be the selected area.

The table selection unit 147 selects the first table TB1 when the output-side coordinates (U, V) output by the coordinate counter 146 belong to the first correction area, and selects the second table TB2 when the output-side coordinates (U, V) belong to the second correction area. The warp processing unit 145 converts the output-side coordinates (U, V) into input-side coordinates (X, Y) using the table selected by the table selection unit 147.

For example, when the HUD includes a first projection optical system and a second projection optical system, an area projected by the first projection optical system may be the first correction area, and an area projected by the second projection optical system may be the second correction area.

Alternatively, an area where an AR display object is displayed may be the first correction area, and an area where a non-AR display object is displayed may be the second correction area. Here, vibration correction may be performed on the first table TB1, thereby causing the AR display object to follow an object in the real world. Due to the vibration of the vehicle on which the HUD is mounted, the AR display object projected by the HUD and the object in the real world viewed by the user differ in position. The vibration correction corrects the difference in position. In the vibration correction, the distortion correction circuit 140 calculates an amount difference in position based on information from an acceleration sensor, a gyro sensor, a LiDAR, a camera, or the like. The distortion correction circuit 140 corrects the first table TB1 so that the AR display object is shifted by the calculated amount of difference, and performs distortion correction on the first correction area using the corrected first table TB1. In this example, the first correction area and the second correction area may be selected areas.

In the present embodiment described above, the circuit device 100 includes the image selection circuit 120, the buffer memory 130, and the distortion correction circuit 140. The image selection circuit 120 selects selected image data IMS, which is image data of a selected area smaller than the input image, from the input image data IMA, which is image data of the input image. The buffer memory 130 stores the selected image data IMS. The distortion correction circuit 140 performs distortion correction on the input image and outputs output image data IMB as image data of an output image. The selected area includes a plurality of areas or a polygonal area. When the input-side coordinates (X, Y) of the input image corresponding to the output-side coordinates (U, V) of the output image belong to the selected area, the distortion correction circuit 140 generates pixel data of the output image data IMB at the output-side coordinates (U, V) from the selected image data IMS stored in the buffer memory 130.

According to the present embodiment, since the selected image data IMS as the image data of the selected area smaller than the input image is stored in the buffer memory 130, the buffer size in the distortion correction is reduced as compared with the case where the input image is directly buffered. Thus, the chip size of the circuit device 100 is reduced, or the cost of the circuit device 100 is reduced.

The selected area corresponds to the plurality of areas ARA and ARB in the example of FIG. 4, the plurality of areas ARA and ARC in the example of FIG. 5, and the polygonal area ARD in the example of FIG. 6. However, as described above, the selected area is not limited thereto.

In the present embodiment, when the input-side coordinates (X, Y) do not belong to the selected area, the distortion correction circuit 140 sets the pixel data at the output-side coordinates (U, V) to predetermined color data. The predetermined color data may be, for example, color data to be transparent when displayed by the display device 200.

According to the present embodiment, since the pixel data of the output image data IMB is generated for an area outside the selected area, the image data of the selected area may be buffered in the buffer memory 130. Since the area outside the selected area is a transparent area, it is only necessary to set the pixel data into predetermined color data for that area.

In the present embodiment, the selected area may include a first area and a second area as the plurality of areas. Hereinafter, it is assumed that the first area is the area ARE and the second area is the area ARF using FIG. 8 as an example. The image selection circuit 120 selects first image data of the first area ARE and second image data of the second area ARF as the selected image data IMS and stores the selected image data in the buffer memory 130. When the input-side coordinates (X, Y) belong to the first area ARE, the distortion correction circuit 140 generates pixel data at the output-side coordinates (U, V) from the first image data stored in the buffer memory 130. When the input-side coordinates (X, Y) belong to the second area ARF, the distortion correction circuit 140 generates pixel data at the output-side coordinates (U, V) from the second image data stored in the buffer memory 130.

According to the present embodiment, when the selected area includes a plurality of areas, the output image data IMB is generated from the image data of the area according to the area to which the input-side coordinates (X, Y) corresponding to the output-side coordinates (U, V) belong. Accordingly, the distortion correction is appropriately performed on the image data of each area of the selected area stored in the buffer memory 130.

As described in S2 to S6 of FIG. 8 and FIG. 9, the image selection circuit 120 converts the input-side coordinates (X, Y) into the selected coordinates (Xs, Ys) in the selected area in which the first area ARE and the second area ARF are combined, and stores the selected image data IMS in the buffer memory 130. When the input-side coordinates (X, Y) belong to the first area ARE, the distortion correction circuit 140 converts the input-side coordinates (X, Y) into the selected coordinates (Xs, Ys) of the first area ARE, and refers to the first image data stored in the buffer memory 130 based on the selected coordinates (Xs, Ys). When the input-side coordinates (X, Y) belong to the second area ARF, the distortion correction circuit 140 converts the input-side coordinates (X, Y) into the selected coordinates (Xs, Ys) of the second area ARF and refers to the second image data stored in the buffer memory 130 based on the selected coordinates (Xs, Ys).

According to the present embodiment, since the input-side coordinates (X, Y) are converted into the selected coordinates (Xs, Ys) in the selected image stored in the buffer memory 130, the pixel data corresponding to the input-side coordinates (X, Y) is appropriately acquired from the image data stored in the buffer memory 130.

In the present embodiment, the circuit device 100 includes the storage circuit 160 that stores the area setting information 161 for setting the selected area. The distortion correction circuit 140 determines whether the input-side coordinates (X, Y) belong to the selected area based on the area setting information 161.

According to the present embodiment, when the display area of the display object in the screen is known, the area setting information 161 with the display area as the selected area can be stored in the storage circuit 160. The distortion correction circuit 140 performs the distortion correction based on the area setting information 161, so that the output image data IMB in which the distortion of the display object is appropriately corrected is obtained, and the memory capacity of the buffer memory 130 is saved.

In the present embodiment, the input image includes a plurality of display objects. The selected area includes a plurality of areas each including each display object of a plurality of display objects or a polygonal area including a plurality of display objects.

According to the present embodiment, the display area of the display object is set as the selected area, and the area without the display object is not stored in the buffer memory 130, thereby saving the memory capacity.

In the example of FIG. 4, the input image includes the plurality of display objects DBA and DBB, the selected area includes the plurality of areas ARA and ARB, and each area includes each display object. In the example of FIG. 5, the input image includes the plurality of display objects DBA and DBC, the selected area includes the plurality of areas ARA and ARC, and each area includes each display object. In the example of FIG. 6, the input image includes the plurality of display objects DBA and DBC, and the selected area includes the polygonal area ARD including the plurality of display objects DBA and DBC. However, as described above, the display object and the selected area are not limited thereto.

As described with reference to FIG. 10, the distortion correction circuit 140 reads the pixel data of the plurality of pixels P1 to P16 around the input-side coordinates (X, Y) from the buffer memory 130 and performs interpolation processing on the pixel data of the plurality of pixels P1 to P16 to obtain the pixel data of the output image data IMB corresponding to the output-side coordinates (U, V). Concurrently, when the input-side coordinates (X, Y) belong to the selected area and part of the plurality of pixels P1 to P16 do not belong to the selected area, the distortion correction circuit 140 performs interpolation processing using the pixel data of the pixels P3, P4, P7, P8, P11, P12, P15, and P16 belonging to the selected area among the plurality of pixels P1 to P16.

According to the present embodiment, even when the input-side coordinates (X, Y) are in the vicinity of the boundary of the selected area, the pixel interpolation can be performed by using the pixel data of the selected area stored in the buffer memory 130 and excluding the pixel data outside the selected area not stored in the buffer memory 130.

In the present embodiment, the output interface circuit 150 outputs the output image data IMB to the display device 200 that projects the output image using the projection optical system. The distortion correction circuit 140 corrects image distortion caused by distortion of the projection optical system or distortion of the projection surface.

As described with reference to FIG. 1 and the like, when correcting the image distortion caused by the distortion of the projection optical system or the distortion of the projection surface, the buffer memory 130 that buffers the input image is necessary. According to the present embodiment, since the selected image which is a part of the input image is buffered, the memory capacity of the buffer memory 130 is saved.

In the present embodiment, the head-up display 500 includes any one of the circuit devices 100 described above and the display device 200 that projects an output image using the projection optical system.

While the present embodiment has been described in detail above, a person skilled in the art could readily understand that many modifications can be made without substantially departing from the novel matters and effects of the present disclosure. Therefore, all such modifications are within the scope of the present disclosure. For example, a term described at least once together with a different term having a broader meaning or the same meaning in the specification or the drawings can be replaced with the different term in any part in the specification or the drawings. All combinations of the present embodiment and the modifications are also within the scope of the present disclosure. The configurations, operations, and the like of the input interface circuit, the image selection circuit, the buffer memory, the distortion correction circuit, the output interface circuit, the storage circuit, the circuit device, the processing device, the display device, the head-up display, and the like are not limited to those described in the present embodiment, and various modifications can be made.

## Claims

1. A circuit device comprising:
an image selection circuit that selects selected image data that is image data of a selected area smaller than an input image from input image data that is image data of the input image;
a buffer memory that stores the selected image data; and
a distortion correction circuit that performs distortion correction on the input image and outputs output image data that is image data of an output image, wherein
the selected area includes a plurality of areas or a polygonal area, and
when input-side coordinates of the input image corresponding to output-side coordinates of the output image belong to the selected area, the distortion correction circuit generates pixel data of the output image data at the output-side coordinates from the selected image data stored in the buffer memory.

2. The circuit device according to claim 1, wherein
the distortion correction circuit sets the pixel data at the output-side coordinates to predetermined color data when the input-side coordinates do not belong to the selected area.

3. The circuit device according to claim 1, wherein
the selected area includes a first area and a second area as the plurality of areas,
the image selection circuit selects first image data of the first area and second image data of the second area as the selected image data and stores the first image data and the second image data in the buffer memory, and
the distortion correction circuit generates the pixel data at the output-side coordinates from the first image data stored in the buffer memory when the input-side coordinates belong to the first area, and generates the pixel data at the output-side coordinates from the second image data stored in the buffer memory when the input-side coordinates belong to the second area.

4. The circuit device according to claim 3, wherein
the image selection circuit converts the input-side coordinates into selected coordinates in the selected area in which the first area and the second area are combined, and stores the selected image data in the buffer memory, and
the distortion correction circuit converts the input-side coordinates into the selected coordinates in the first area when the input-side coordinates belongs to the first area and refers to the first image data stored in the buffer memory based on the selected coordinates, and converts the input-side coordinates into the selected coordinates in the second area when the input-side coordinates belongs to the second area and refers to the second image data stored in the buffer memory based on the selected coordinates.

5. The circuit device according to claim 1, comprising a storage circuit that stores area setting information for setting the selected area, wherein
the distortion correction circuit determines whether the input-side coordinates belong to the selected area based on the area setting information.

6. The circuit device according to claim 1, wherein
the input image includes a plurality of display objects, and
the selected area includes the plurality of areas each including each of the plurality of display objects or the polygonal area including the plurality of display objects.

7. The circuit device according to claim 1, wherein
the distortion correction circuit reads pixel data of a plurality of pixels around the input-side coordinates from the buffer memory and obtains pixel data of the output image data corresponding to the output-side coordinates by performing interpolation processing on the pixel data of the plurality of pixels, and performs the interpolation processing using pixel data of a pixel belonging to the selected area among the plurality of pixels when the input-side coordinates belong to the selected area and part of the plurality of pixels do not belong to the selected area.

8. The circuit device according to claim 1, wherein
an output interface circuit outputs the output image data to a display device that projects the output image using a projection optical system, and
the distortion correction circuit corrects image distortion caused by distortion of the projection optical system or distortion of a projection surface.

9. A head-up display comprising:
the circuit device according to claim 1; and
a display device that projects the output image using a projection optical system.
